# EUROPEAN PATENT APPLICATION

(11) **EP 3 094 077 A1**
(43) Date of publication of application: **16.11.2016**
(21) Application number: 16169529.1
(22) Date of filing: 13.05.2016
(51) Int. Cl.: H04N 5/225, B60S 1/02, G03B 17/55

(54) **IMAGING DEVICE**

(30) Priority: 15.05.2015 JP 2015099848
(71) Applicant: KABUSHIKI KAISHA TOKAI RIKA DENKI SEISAKUSHO, Niwa-gun, Aichi 480-0195 (JP)
(72) Inventor: NAKAI, Toshinari, Niwa-gun, Aichi 480-0195 (JP); INAYAMA, Masahide, Niwa-gun, Aichi 480-0195 (JP); IWATSUKI, Masakazu, Niwa-gun, Aichi 480-0195 (JP)
(74) Representative: TBK

(57) **Abstract**

In an imaging device 10, a camera 12 images an image through a lens 18. Moreover, a heat transfer member 26 transfers heat to the lens 18, and heats the lens 18. Here, the lens 18 is exposed to the exterior of the imaging device 10 through an exposing hole 28 of the heat transfer member 26 and an opening 24 of the design cover 22. Thus, a larger amount of light can be made incident to the imaging element 20.

## Description

### BACKGROUND

### Field of the Invention

The present invention relates to an imaging device in which an imaging section images an image through a lens.

### Related Art

In an image acquiring unit described by Japanese National-Phase Publication No. 2006-525897, a transparent element is exposed to the outside, and a heating unit transfers heat to the transparent element thereby heating the transparent element.

In this image acquiring unit, the transparent element is disposed at the opposite side to an image detector of an optical system, and the image detector images an image through the transparent element and the optical system.

### SUMMARY

In consideration of the above particulars, the present invention is to obtain an imaging device capable of making a larger amount of light incident to an imaging section.

An imaging device of a first aspect includes: an imaging mechanism that is provided at a vehicle, that is provided with a lens exposed to an exterior of the imaging device, and that is provided with an imaging section which images through the lens an image; and a heating member that configures an outer periphery of the imaging device and that transfers heat to the lens and heats the lens.

An imaging device of a second aspect is the imaging device of the first aspect, wherein the lens protrudes (projects out) toward an exterior side of the imaging device.

An imaging device of a third aspect is the imaging device of the first aspect or second aspect, wherein the heating member does not face the imaging section in an axial direction of the lens.

An imaging device of a fourth aspect is the imaging device of any one of the first aspect to the third aspect, further including a heat generator that generates heat and transfers heat to the heating member such that the heating member transfers heat to the lens.

It is possible in the imaging device of any one of the above aspects that an opening portion through which the lens is exposed to the exterior of the imaging device is formed at an end portion, which is at an opposite side from an image section side in the axial direction of the lens, of the heating member.

It is possible in the imaging device of any one of the above aspects that a projection, which projects toward an axis of the lens from a circumferential face of the opening portion, is provided at the heating member.

It is possible in the imaging device of any one of the above aspects that an end face of the end portion configures a part of the outer periphery of the imaging device.

In the imaging device of the first aspect, the imaging mechanism is provided at the vehicle and in the imaging mechanism the imaging section images an image through the lens. Moreover, the heating member configures the outer periphery of the imaging device and the heating member transfers heat to the lens.

The lens is exposed to the exterior of the imaging device. A larger amount of light can thereby be made incident to the imaging section.

In the imaging device of the second aspect, the lens projects out the exterior side of the imaging device. Foreign matter can therefore be suppressed from settling on the lens.

In the imaging device of the third aspect, the heating member does not face the imaging section in the axial direction of the lens. The heating member can therefore suppress imaging by the imaging section from being obstructed.

In the imaging device of the fourth aspect, the heat generator generates heat and transfers heat to the heating member such that the heating member transfers heat to the lens. This enables the need for the heating member to generate heat to be obviated, and enables simplification of the heating member configuration.

### BRIEF DESCRIPTION OF THE DRAWINGS

Exemplary embodiments will be described in detail with reference to the following figures, wherein:
Fig. 1 is a perspective view illustrating an imaging device according to an exemplary embodiment viewed from above and diagonally from the vehicle rear;
Fig. 2A is a perspective view illustrating a heating member and a heater of an imaging device according to an exemplary embodiment viewed from above and diagonally from the vehicle rear;
Fig. 2B is a perspective view illustrating a camera and a design cover of an imaging device according to an exemplary embodiment viewed from above and diagonally from the vehicle rear; and
Fig. 3 is a face-on view illustrating relevant portions of an imaging device according to a modified example of an exemplary embodiment viewed from the vehicle rear.

### DETAILED DESCRIPTION

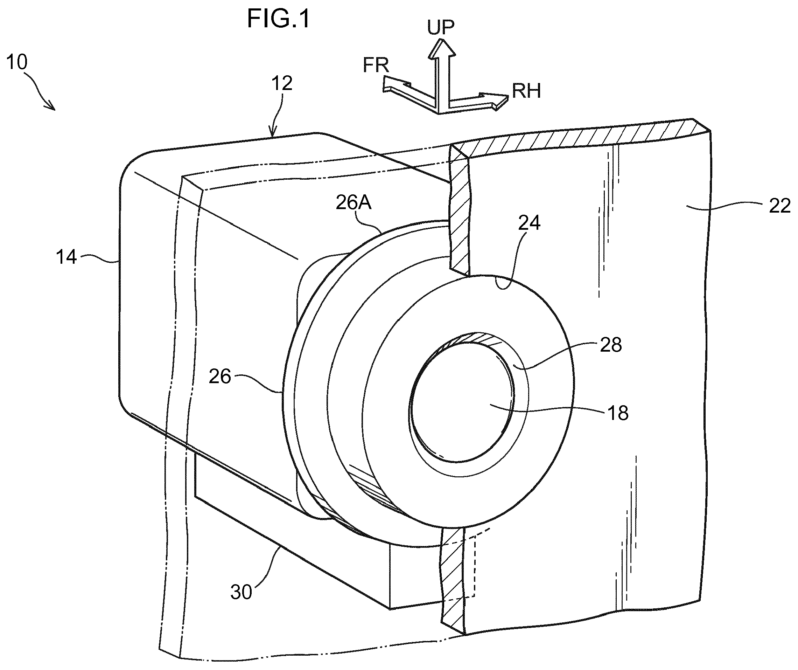

Fig. 1 illustrates a perspective view of an imaging device 10 according to an exemplary embodiment, as viewed from above diagonally from a vehicle rear. In the drawings, the arrow FR indicates a vehicle front side, the arrow RH indicates a vehicle right side, and the arrow UP indicates a vehicle upper side.

The imaging device 10 according to the present exemplary embodiment is installed on the outside of a vehicle front side end of an up-down direction intermediate portion of a side door (a front side door; not shown in the drawings) that serves as a vehicle body side of a vehicle.

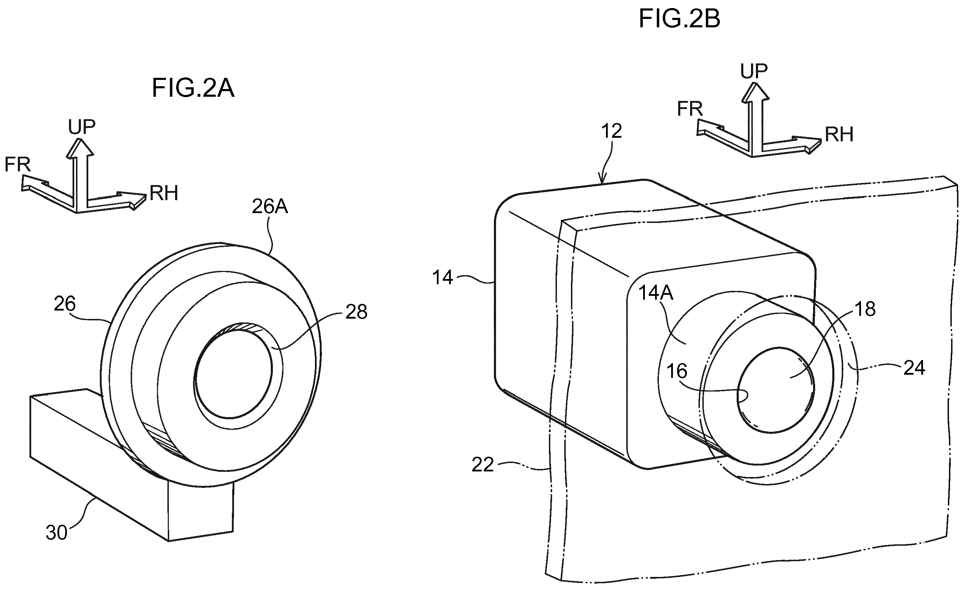

As illustrated in Fig. 1 and Fig. 2B, a camera 12 serving as an imaging mechanism is provided at the imaging device 10, and the camera 12 is directly or indirectly supported by the side door.

A rectangular parallelopiped box shaped casing 14 is provided at the outer periphery of the camera 12, and the length direction (axial direction) of the casing 14 is disposed parallel to the vehicle front-rear direction. A substantially bottomed circular tube shaped lens tube 14A, serving as a fixing portion, is integrally and coaxially provided to a vehicle rear side wall of the casing 14. The interior of the lens tube 14A is in communication with the interior of the casing 14, and a circular lens hole 16 is formed penetrating coaxially through a vehicle rear side wall (bottom wall). The casing 14 is made from a resin or the like, and has low heat transfer capability.

A lens 18, which is circular in face-on view, is fixed coaxially inside the lens tube 14A, and the lens 18 is exposed to the vehicle rear side through the lens hole 16 of the lens tube 14A. A vehicle rear side face (obverse surface) of the lens 18 is curved in a convex shape, and the lens 18 projects out toward the vehicle rear side of the lens tube 14A. The lens 18 is made from glass and is capable of transmitting light. Light is transmitted through the lens 18 such that the direction of incidence of light to the lens 18 is not parallel to the direction of emission from the lens 18.

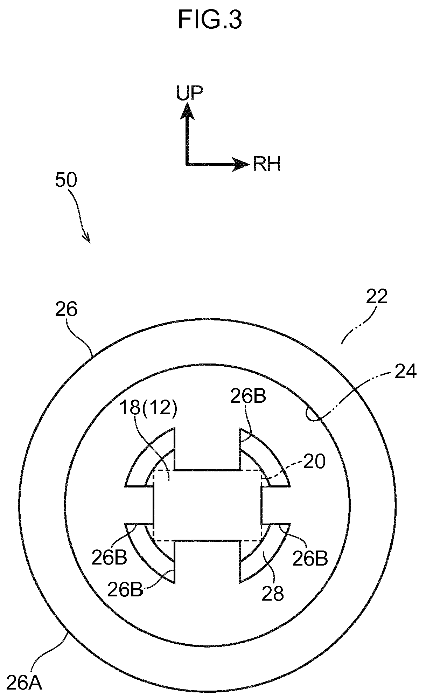

A substantially rectangular plate shaped imaging element 20 (an image sensor; see Fig. 3) serving as an imaging section is provided inside the casing 14, and the imaging element 20 is disposed at the vehicle front side of the lens 18. The imaging element 20 is disposed coaxially to the lens 18, and the imaging element 20 is disposed such that its length direction is parallel to the vehicle left-right direction, and its width direction is parallel to the vehicle up-down direction.

In the camera 12, the imaging element 20 can image, through the lens 18, image (can capture an image) of the vehicle rear side. Moreover, water is restricted from penetrating into the camera 12.

The camera 12 is housed inside a box shaped design cover 22 serving as a housing member, and the design cover 22 is directly or indirectly supported by the side door. The design cover 22 configures the outer periphery of the imaging device 10 (the outer periphery of the vehicle), and the design cover 22 configures a design face of the imaging device 10. A circular opening 24 is formed penetrating through a vehicle rear side wall of the design cover 22, and the circular opening 24 is disposed coaxially to the lens 18 of the camera 12, and exposes the lens 18 to the vehicle rear side.

As illustrated in Fig. 1 and Fig. 2A, a substantially bottomed circular tube shaped heat transfer member 26, serving as a heating member, is provided at the vehicle rear side of the camera 12, and the interior of the heat transfer member 26 is open toward the vehicle front side. A vehicle rear side end of the outer periphery of the heat transfer member 26 fits into and is fixed in the opening 24 of the design cover 22, and a vehicle rear side end face of the heat transfer member 26 is flush with the design cover 22. The vehicle rear side face of the heat transfer member 26 is exposed to the vehicle rear side through the opening 24, and the vehicle rear side face of the heat transfer member 26 configures the outer periphery of the imaging device 10 (the outer periphery of the vehicle), and configures a design face of the imaging device 10.

A circular exposing hole 28 is formed coaxially penetrating through a vehicle rear side wall (bottom wall) of the heat transfer member 26, and a circumferential face of the exposing hole 28 is inclined in a direction toward the radial direction outside of the exposing hole 28 on progression toward the vehicle rear side. The exposing hole 28 is disposed coaxially to the lens 18 of the camera 12, and exposes the lens 18 to the vehicle rear side. The lens 18 is inserted into the exposing hole 28. The circumferential face of the exposing hole 28 is disposed at a radial direction outside of a portion, exposed by the lens hole 16, of the lens 18, and the vehicle rear side wall of the heat transfer member 26 contacts an outer periphery of the portion, exposed by the lens hole 16, of the lens 18 (though there may be slight separation therebetween), across the entire circumferential direction. A diameter dimension of the vehicle front side end of the exposing hole 28 is set equal to or greater than a diameter dimension (a diagonal dimension) of the imaging element 20 of the camera 12, so the vehicle rear side wall of the heat transfer member 26 does not face the imaging element 20 in the direction of the optical axis (axial direction) of the lens 18. Namely, as views along the direction of the optical axis (axial direction) of the lens 18, the imaging element 20 is arranged inside the exposing hole 28.

There is sealing between the heat transfer member 26, and the design cover 22 and the camera 12, and this restricts water from penetrating inside the design cover 22.

The heat transfer member 26 is made from a metal (such as aluminum), and the heat transfer member 26 has high heat transfer capability. An annular plate shaped flange 26A is provided integrally and coaxially to the outer periphery of a vehicle front side end portion of the heat transfer member 26, and the flange 26A projects out toward the radial direction outside of the heat transfer member 26.

A long rectangular parallelopiped shaped heater 30, serving as a heat generator, is provided at a lower side of the camera 12, and the heater 30 is disposed at the vehicle front side of a lower end of the flange 26A of the heat transfer member 26, and is housed inside the design cover 22. The heater 30 contacts the flange 26A (though there may be a slight separation therebetween). The heater 30 generates heat and transfers the heat to the heat transfer member 26 (the flange 26A), such that the heat transfer member 26 transfers the heat to the lens 18 of the camera 12 and heats the lens 18.

The imaging element 20 of the camera 12 and the heater 30 are electrically connected to a controller (not shown in the drawings) inside the vehicle. The imaging element 20 is thus operated under control by the controller, and the imaging element 20 images through the lens 18 an image of the vehicle rear side. The heater 30 is operated under control by the controller, and the heater 30 generates heat.

A monitor (not shown in the drawings) serving as a display unit is electrically connected to the controller, and an image that has been imaged by the imaging element 20 is displayed on the monitor under control by the controller. The monitor is disposed inside the vehicle cabin, and an occupant of the vehicle checks the image displayed on the monitor (the image that has been imaged by the imaging element 20), such visual recognition of the vehicle rear side by the occupant is assisted.

Next, explanation follows regarding operation of the present exemplary embodiment.

In the imaging device 10 configured as described above, the imaging element 20 operates in the camera 12 such that the imaging element 20 images through the lens 18 an image of the vehicle rear side.

When the heater 30 is operated, the heater 30 generates heat and transfers the heat to the heat transfer member 26, and the heat transfer member 26 transfers the heat to the lens 18 and heats the lens 18. Accordingly, ice adhered to the lens 18 can be removed (melted) from the lens 18 when ice has formed on the lens 18 (when freezing occurs on the lens 18), and water droplets adhered to the lens 18 (mist on the lens 18) can be removed (evaporated) when condensation has formed on the 18.

The lens 18 is exposed to the outside of the imaging device 10 through the exposing hole 28 of the heat transfer member 26 and the opening 24 of the design cover 22. Accordingly, unlike the case in which the transparent element of Japanese National-Phase Publication No. 2006-525897 is provided to the opposite side to the imaging element 20 of the lens 18, a larger amount of light can be made incident to the imaging element 20, and the capability of the imaging device 10 to image an image external of the imaging device 10 using the imaging element 20 can be improved. Since there is no need to provide a transparent element, the imaging device 10 can be made more compact, and the cost can be reduced. Moreover, configuration can be simplified since there is no need to seal a space between the transparent element and the lens 18 in order to prevent condensation on the lens 18 side face of the transparent element.

The vehicle rear side face of the heat transfer member 26 configures at least a part of the outer periphery of the imaging device 10, and the vehicle rear side wall of the heat transfer member 26 (the circumferential face of the exposing hole 28) is disposed at the radial direction outside of the portion, exposed by the lens hole 16, of the lens 18. Thus, the heat transfer member 26 can effectively transfer heat to the lens 18, the heat transfer member 26 can effectively heat the lens 18, and the time taken for ice or water droplets adhered to the lens 18 to be removed can be reduced even in cold environments.

Moreover, the vehicle rear side face of the lens 18 projects out toward the outer side of the imaging device 10. Thus, foreign matter such as dust can be suppressed from settling on the vehicle rear side face of the lens 18, and the foreign matter can be suppressed from obstructing imaging by the imaging element 20.

Moreover, the circumferential face of the exposing hole 28 of the heat transfer member 26 is inclined in a direction toward the radial direction outside of the exposing hole 28 on progression toward the vehicle rear side (the opposite side to the lens 18). Thus, foreign matter such as dust can be further suppressed from settling on the vehicle rear side face of the lens 18, and the foreign matter can be further suppressed from obstructing imaging by the imaging element 20.

Moreover, the vehicle rear side wall of the heat transfer member 26 does not face the imaging element 20 of the camera 12 in the optical axis direction of the lens 18. Thus, the vehicle rear side wall of the heat transfer member 26 can be suppressed from obstructing the imaging by the imaging element 20.

Moreover, the heater 30 generates heat and transfers the heat to the heat transfer member 26, such that heat transfer member 26 transfers the heat to the lens 18. Thus, the need for the heat transfer member 26 to generate heat can be obviated, the configuration of the heat transfer member 26 can be simplified, and the design of the design face of the imaging device 10, configuring the heat transfer member 26, can be easily improved. Moreover, the amount of heat generated by the heater 30 can be easily increased, and the time taken to remove ice or water droplets adhered to the lens 18 can be easily shortened.

### Modified Example

Fig. 3 illustrates relevant portions of an imaging device 50 according to a modified example of the present exemplary embodiment, viewed from the vehicle rear side in a face-on view.

As illustrated in Fig. 3, in the imaging device 50 according to the present modified example, projections 26B that are substantially rectangular in face-on view are integrally provided at the vehicle rear side wall (bottom wall) of the heat transfer member 26 at both up-down direction end portions and both vehicle left-right end portions of the circumferential face of the exposing hole 28, and the projections 26B project out toward the central axial line side of the lens 18. Vehicle front side faces of the projections 26B curve along the vehicle rear side face of the lens 18 at portions facing the lens 18, the projections 26B contact (make face contact with) the lens 18 (there might be a slight separation therebetween). Projecting ends of the projections 26B are disposed along the outer periphery of the imaging element 20 of the camera 12 in the optical axis direction of the lens 18 (they may be disposed at the outer peripheral outside of the imaging element 20), so the projections 26B do not face the imaging element 20 in the optical axis direction of the lens 18.

The present modified example can also exhibit operation and advantageous effects similar to those of the exemplary embodiment above.

Moreover, the projections 26B are integrally provided at the vehicle rear side wall of the heat transfer member 26 at the circumferential face of the exposing hole 28. Thus, the heat transfer member 26 can transfer heat to the lens 18 further by the projections 26B, the amount of heat transferred to the lens 18 by the heat transfer member 26 can be increased, and the time taken to remove ice and water droplets adhered to the lens 18 can be further shortened.

Moreover, the projections 26B do not face the imaging element 20 of the camera 12 in the optical axis direction of the lens 18. Thus, the projections 26B can be suppressed from obstructing imaging by the imaging element 20.

In the present exemplary embodiment (including the modified example), the heat transfer member 26 does not generate heat. However, the heat transfer member 26 may be configured to generate heat.

Moreover, in the present exemplary embodiment (including the modified example), the camera 12 can image the vehicle rear side. However, the camera 12 may be configured capable of imaging in another direction (for example, the lower side, the upper side, the vehicle width direction inside, the vehicle width direction outside, or the vehicle front side).

Moreover, in the present exemplary embodiment (including the modified example), the imaging device 10, 50 is installed in the side door of the vehicle. However, the imaging device 10, 50 may be installed in a portion other than the side door of the vehicle (at the exterior or in the interior of the vehicle).
In an imaging device 10, a camera 12 images an image through a lens 18. Moreover, a heat transfer member 26 transfers heat to the lens 18, and heats the lens 18. Here, the lens 18 is exposed to the exterior of the imaging device 10 through an exposing hole 28 of the heat transfer member 26 and an opening 24 of the design cover 22. Thus, a larger amount of light can be made incident to the imaging element 20.

## Claims

1. An imaging device comprising:
an imaging mechanism that is provided at a vehicle, that is provided with a lens exposed to an exterior of the imaging device, and that is provided with an imaging section which images through the lens an image; and
a heating member that configures an outer periphery of the imaging device and that transfers heat to the lens and heats the lens.

2. The imaging device of claim 1, wherein the lens protrudes toward an exterior side of the imaging device.

3. The imaging device of claim 1 or claim 2, wherein the heating member does not face the imaging section in an axial direction of the lens.

4. The imaging device of any one of claim 1 to claim 3, further comprising a heat generator that generates heat and transfers heat to the heating member such that the heating member transfers heat to the lens.

5. The imaging device of any one of claim 1 to claim 4, wherein an opening portion through which the lens is exposed to the exterior of the imaging device is formed at an end portion, which is at an opposite side from an image section side in the axial direction of the lens, of the heating member.

6. The imaging device of any one of claim 1 to claim 5, wherein a projection, which projects toward an axis of the lens from a circumferential face of the opening portion, is provided at the heating member.

7. The imaging device of any one of claim 1 to claim 6, wherein an end face of the end portion configures a part of the outer periphery of the imaging device.
